# EUROPEAN PATENT APPLICATION

(11) **EP 4 592 737 A1**
(43) Date of publication of application: **30.07.2025**
(21) Application number: 23886256.9
(22) Date of filing: 01.11.2023
(51) Int. Cl.: G02B 27/01, G06T 19/00, G06F 3/01, G06F 1/16, G06F 3/00

(54) **WEARABLE ELECTRONIC DEVICE AND OPERATION METHOD THEREOF**

(30) Priority: 02.11.2022 KR 20220144391; 12.12.2022 KR 20220172619
(71) Applicant: Samsung Electronics Co., Ltd., Suwon-si, Gyeonggi-do 16677 (KR)
(72) Inventor: PARK, Kyongtae, Suwon-si, Gyeonggi-do 16677 (KR); KIM, Nari, Suwon-si, Gyeonggi-do 16677 (KR); YOO, Chanhyung, Suwon-si, Gyeonggi-do 16677 (KR); JUNG, Hoyoung, Suwon-si, Gyeonggi-do 16677 (KR)
(74) Representative: Gulde & Partner
(86) International application number: PCT/KR2023/017232
(87) International publication number: WO 2024/096560

(57) **Abstract**

A wearable electronic device according to an embodiment of the present disclosure may comprise: a first camera corresponding to the left eye of a user and having a first angle of view; a second camera corresponding to the right eye of the user and having the first angle of view; a third camera having a second angle of view that is greater than the first angle of view; a first display corresponding to the left eye of the user; a second display corresponding to the right eye of the user; and a processor. The processor may generate a left-eye image on the basis of a wide-viewing angle image acquired through the third camera and an image corresponding to the left-eye acquired through the first camera. The processor may generate a right-eye image on the basis of the wide-viewing angle image and an image corresponding to the right-eye acquired through the second camera. The processor may display, via the first display, a left-eye composite image obtained by combining the left-eye image and a virtual image. The processor may display, via the second display, a right-eye composite image obtained by combining the right-eye image and the virtual image. Various other embodiments may be included.

## Description

### [Technical Field]

Various embodiments of the disclosure relate to wearable electronic devices and an operation method thereof.

### [Background Art]

Augmented reality (AR) is a field of virtual reality (VR), and is a computer graphics technique for synthesizing images related to virtual objects (or information) into images corresponding to an actual environment. Augmented reality may be applied to products such as wearable electronic devices to provide users with various user experiences. For example, a wearable electronic device that supports augmented reality may be a head-mounted display (HMD) device or AR glasses, and may be named a "video see-through (VST) device" because it includes a see-through display.

A VST device may include a display panel, which is a light source for outputting images, a projection lens that inputs images output from the display panel into a light waveguide, and a light waveguide that propagates the input images to reach the user's eyes.

In the see-through display of a VST device, the unit for defining the resolution of the display is pixels per degree (PPD). PPD may be a unit of angular resolution that numerically represents the number of pixels concentrated within a viewing angle of about 1 degree. For example, if the angular resolution of a display is 5 PPD, an average person with normal eyesight may distinguish 5 lines displayed at equal intervals within a viewing angle of about 1 degree. Therefore, as PPD, i.e., the angular resolution of a see-through display, increases, the user may experience more realistic images. For example, if a see-through display outputs a screen of about 60 PPD or higher, the user may feel a sense of reality similar to viewing the real world.

The above-described information may be provided as related art for the purpose of assisting in understanding the disclosure. No assertion or decision is made as to whether any of the above might be applicable as prior art with regard to the disclosure.

### [Disclosure of Invention]

### [Technical Problem]

In order for a VST device to provide a screen of about 60 PPD or higher, the see-through display is required to include a high-resolution camera, as well as having high-resolution specifications. For example, even in the case where a see-through display has an angular resolution of about 60 PPD or higher, if the camera captures an image with an angular resolution of about 20 PPD, the VST device may provide a composite image (e.g., an image obtained by synthesizing a virtual image and a real-world image) of less than about 60 PPD, failing to provide a realistic image to the user.

Meanwhile, it is known that if a user wears a wearable electronic device as a VST device for a long time to view an image, eye fatigue increases, so research and development on driving technology for a VST device is ongoing in order to reduce eye fatigue of the user.

An embodiment of the disclosure may provide a wearable electronic device capable of providing a user with an augmented reality image with high angular resolution to provide a sense of reality similar to viewing the real world, facilitating design with compact and lightweight configuration, and reducing eye fatigue of the user, and an operation method thereof.

The technical subjects pursued in the disclosure may not be limited to the above-mentioned technical subjects, and other technical subjects which are not mentioned may be clearly understood, through the following descriptions, by those skilled in the art to which the disclosure pertains.

A wearable electronic device according to an embodiment of the disclosure may include a first camera corresponding to the user's left eye and having a first angle of view, a second camera corresponding to the user's right eye and having the first angle of view, a third camera having a second angle of view greater than the first angle of view, a first display corresponding to the user's left eye, a second display corresponding to the user's right eye, and a processor. The processor may generate a left-eye image, based on an image corresponding to the left eye obtained through the first camera and a wide-viewing angle image obtained through the third camera. The processor may generate a right-eye image, based on an image corresponding to the right eye obtained through the second camera and the wide-viewing angle image. The processor may display a left-eye composite image obtained by synthesizing a virtual image with the left-eye image through the first display. The processor may display a right-eye composite image obtained by synthesizing the virtual image with the right-eye image through the second display.

An operation method of a wearable electronic device according to an embodiment of the disclosure may include obtaining an image corresponding to the left eye corresponding to the user's left eye and having a first angle of view using a first camera, obtaining an image corresponding to the right eye corresponding to the user's right eye and having the first angle of view using a second camera, obtaining a wide-viewing angle image having a second angle of view greater than the first angle of view using a third camera, generating a left-eye image, based on the image corresponding to the left eye obtained through the first camera and the wide-viewing angle image obtained through the third camera, generating a right-eye image, based on the image corresponding to the right eye obtained through the second camera and the wide-viewing angle image, displaying a left-eye composite image obtained by synthesizing a virtual image with the left-eye image through a first display corresponding to the user's left eye, and displaying a right-eye composite image obtained by synthesizing the virtual image with the right-eye image through a second display corresponding to the user's right eye.

A wearable electronic device according to an embodiment of the disclosure and an operation method thereof are able to provide a user with an augmented reality image with high angular resolution to provide a sense of reality similar to viewing the real world, facilitate design with compact and lightweight configuration, and reduce eye fatigue of the user.

Advantageous effects obtainable from the disclosure may not be limited to the above - mentioned effects, and other effects which are not mentioned may be clearly understood from the following descriptions by those skilled in the art to which the disclosure pertains.

### [Brief Description of Drawings]

Other aspects, features, and advantages according to particular embodiments of the disclosure will be more apparent from the relevant accompanying drawings and descriptions.
FIG. 1 is a block diagram of an electronic device 101 in a network environment 100 according to various embodiments.
FIG. 2 is a perspective view showing the configuration of a wearable electronic device according to an embodiment.
FIG. 3 is a conceptual diagram schematically illustrating a state in which a user wears the wearable electronic device shown in FIG. 2 according to an embodiment.
FIG. 4 is a perspective view illustrating a wearable electronic device including two cameras according to an embodiment.
FIG. 5 is a perspective view illustrating a wearable electronic device including four cameras according to an embodiment.
FIG. 6 is a block diagram of a wearable electronic device according to an embodiment.
FIG. 7 illustrates angles of view of respective cameras included in a wearable electronic device according to an embodiment.
FIG. 8 illustrates a state in which a camera of a wearable electronic device photographs a subject at a first distance according to an embodiment.
FIG. 9 illustrates a state in which a camera of a wearable electronic device photographs a subject at a second distance according to an embodiment.
FIG. 10 illustrates an image captured by a first camera of a wearable electronic device according to an embodiment.
FIG. 11 illustrates an image captured by a second camera of a wearable electronic device according to an embodiment.
FIG. 12 illustrates an image captured by a third camera of a wearable electronic device according to an embodiment.
FIG. 13 is a flowchart illustrating the operation of a wearable electronic device according to an embodiment.

It should be noted that the same reference numbers are used to describe the same or similar elements, features, and structures throughout the drawings.

### [Mode for the Invention]

The following description with reference to the accompanying drawings is provided to assist in comprehensive understanding of an embodiment of the disclosure as defined by the claims and equivalents thereof. The description includes various specific details to assist in the understanding, but the details are to be regarded merely as examples. Accordingly, those skill in the art will recognize that various changes and modifications may be made to an embodiment set forth herein without departing from the scope and spirit of the disclosure. In addition, descriptions of well-known functions and configurations may be omitted for the sake of clarity and conciseness.

The terms and words used in the following description and the claims are not limited to the bibliographical meanings thereof, but are merely used by the inventors to enable clear and consistent understanding of the disclosure. Accordingly, it will be apparent to those skilled in the art that the following description of various embodiments of the disclosure is not intended to limit the disclosure as defined by the appended claims and equivalents thereof, but is provided merely for the purpose of illustration.

It is to be understood that the expressions in singular forms include plural referents unless the context clearly dictates otherwise. Therefore, for example, reference to "a component surface" includes reference to one or more such surfaces.

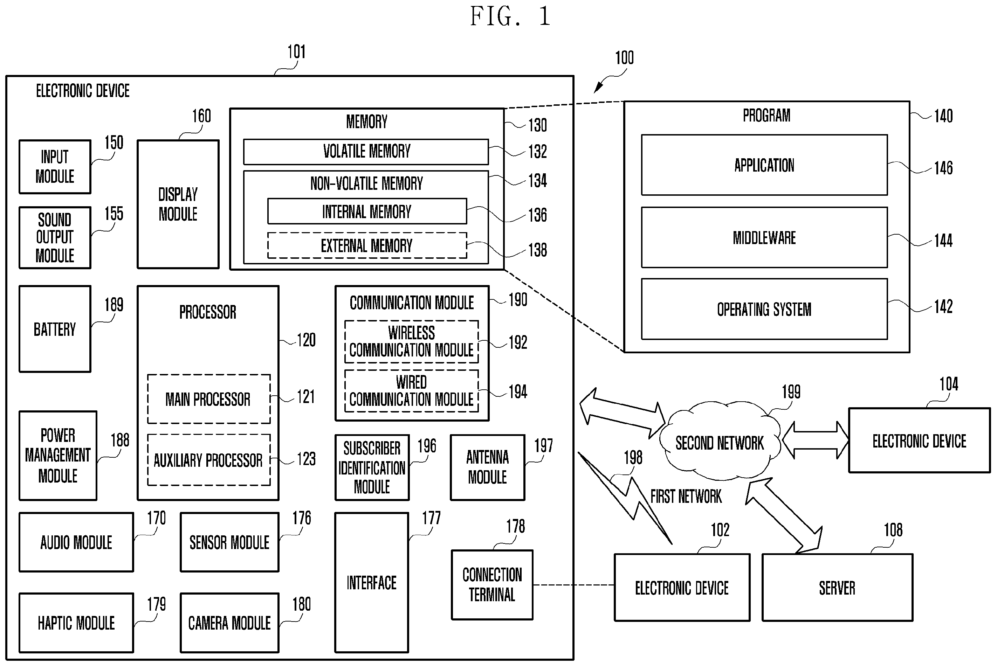

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

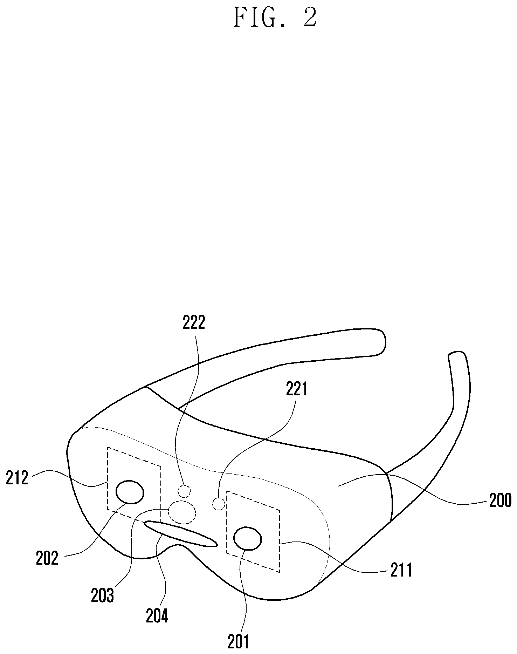

FIG. 2 is a perspective view illustrating the configuration of a wearable electronic device 200 according to an embodiment.

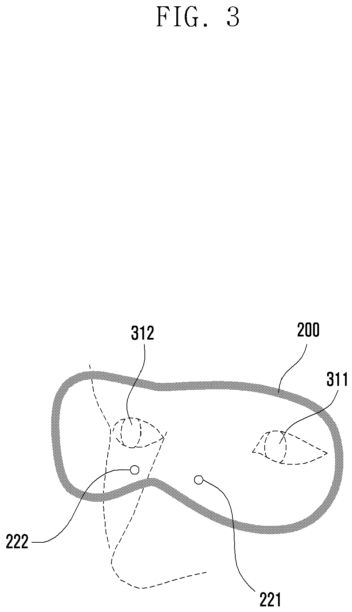

FIG. 3 is a conceptual diagram schematically illustrating a state in which a user wears the wearable electronic device 200 (e.g., the electronic device 101 in FIG. 1) shown in FIG. 2 according to an embodiment.

Referring to FIGS. 2 and 3, the wearable electronic device 200 according to an embodiment may include a first camera 201, a second camera 202, a third camera 203, a first display 211, a second display 212, a depth detection device 204, a first eye tracking device 221, or a second eye tracking device 222.

According to an embodiment, the wearable electronic device 200 may be a head-mounted display (HMD) device or AR glasses, and may be named a "video see-through (VST) device" because it includes a see-through display. The form of the wearable electronic device 200 illustrated in the drawings of the disclosure is only an example, and the disclosure may not be limited thereto.

According to an embodiment, the wearable electronic device 200 may include three cameras for capturing a real environment in front of the user. According to an embodiment, the three cameras may include a first camera 201, a second camera 202, or a third camera 203. The first camera 201 and the second camera 202 may be the same type of camera, and the first camera 201 and the third camera 203 may be different types of cameras.

According to an embodiment, the first camera 201 may be disposed to correspond to the left eye 311 of the user. The first camera 201 may be a camera having a first angle of view, and the first angle of view may be about 30 degrees. For example, the first camera 201 may be a camera that captures an image at an angle of view of about 30 degrees. The angle of view of about 30 degrees, as the angle of view of the first camera 201, is only an example, and the angle of view of the first camera 201 of the wearable electronic device 200 according to various embodiments of the disclosure may not be limited thereto.

According to an embodiment, the second camera 202 may be disposed to correspond to the right eye 312 of the user. The second camera 202 may be a camera having a first angle of view, and the first angle of view may be about 30 degrees. For example, the second camera 202 may be a camera that captures an image at an angle of view of about 30 degrees. According to an embodiment, the second camera 202 may be a camera that is substantially the same as or similar to the first camera 201. The angle of view of about 30 degrees, as the angle of view of the second camera 202, is only an example, and the angle of view of the second camera 202 of the wearable electronic device 200 according to various embodiments of the disclosure may not be limited thereto.

According to an embodiment, the third camera 203 may be disposed between the first camera 201 and the second camera 202. The third camera 203 may be a camera having a second angle of view greater than the first angle of view, and the second angle of view may be about 100 degrees. For example, the third camera 203 may be a camera that captures an image with an angle of view of about 100 degrees. According to an embodiment, the third camera 203 may be a wide-angle camera, which is different from the first camera 201 and the second camera 202. The angle of view of about 100 degrees, as the angle of view of the third camera 203, is only an example, and the angle of view of the third camera 203 of the wearable electronic device 200 according to various embodiments of the disclosure may not be limited thereto.

According to an embodiment, the wearable electronic device 200 may include two displays in order to provide images to the user's left eye 311 and right eye 312, respectively. According to an embodiment, the two displays may include the first display 211 or the second display 212. The first display 211 and the second display 212 may be the same type of display. The first display 211 and the second display 212 may be at least partially similar to the display module 160 described with reference to FIG. 1.

According to an embodiment, the first display 211 may be disposed to correspond to the user's left eye 311.

According to an embodiment, the second display 212 may be disposed to correspond to the user's right eye 312.

According to an embodiment, the components of the first display 211 and the components of the second display 212 may be the same. For example, the arrangement and/or shapes of parts constituting the first display 211 may be the same as the arrangement and/or shapes of parts constituting the second display 212.

According to an embodiment, each of the first display 211 and the second display 212 may include a display panel (not shown) for outputting an image, a projection lens (not shown), combiner optics (not shown), and an optical barrier (not shown) (e.g., a tube).

According to an embodiment, the display panel (not shown) included in each of the first display 211 and the second display 212 may include a liquid crystal on silicon (LCoS), a light-emitting diode (LED) on silicon (LEDoS), an organic light-emitting diode (OLED), a micro light-emitting diode (micro LED), or a digital mirror device (DMD).

According to an embodiment, the depth detection device 204 is a device that detects the depth of an object viewed by the user, and the wearable electronic device 200 may generate a depth map using the depth detection device 204. For example, the depth detection device 204 may include a depth camera. According to an embodiment, the depth detection device 204 may be a stereo camera, a time-of-flight (ToF) camera, or a structure light camera.

According to an embodiment, the wearable electronic device 200 may not include the depth detection device 204. For example, the wearable electronic device 200 may exclude the depth detection device 204, and may generate a depth map using an image acquired through the first camera 201 and an image acquired through the second camera 202.

According to an embodiment, the wearable electronic device 200 may include a first eye tracking device 221 and a second eye tracking device 222 as devices for tracking a user's gaze (e.g., eye tracking (ET)). The wearable electronic device 200 may detect the gaze of both eyes of a user gazing at a specific object in an augmented reality (AR) image or a virtual reality (VR) image displayed through the first display 211 and the second display 212 using the first eye tracking device 221 and the second eye tracking device 222.

According to an embodiment, the first eye tracking device 221 may be a device that detects a gaze corresponding to the user's left eye 311. For example, the first eye tracking device 221 may include an eye tracking camera.

According to an embodiment, the second eye tracking device 222 may be a device that detects a gaze corresponding to the user's right eye 312. For example, the second eye tracking device 222 may include an eye tracking camera.

According to an embodiment, the first eye tracking device 221 and the second eye tracking device 222 may be configured as at least a part of a camera used for 3 degrees of freedom (DoF) or 6DoF head tracking, hand detection, hand tracking, and/or spatial recognition.

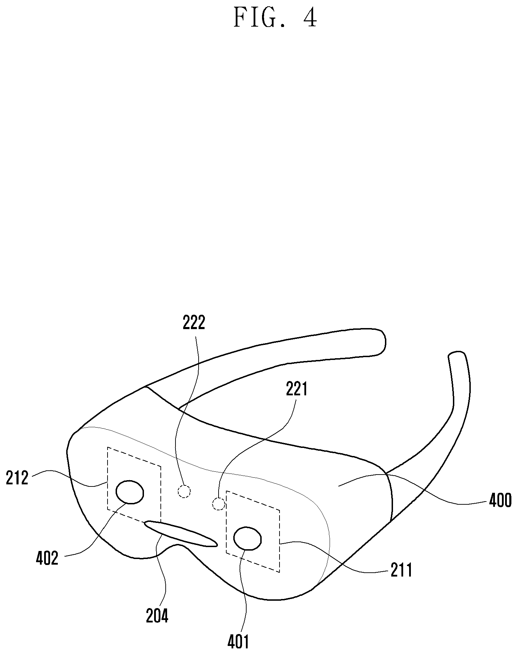

FIG. 4 is a perspective view illustrating a wearable electronic device 400 including two cameras according to an embodiment.

At least a part of the wearable electronic device 400 (e.g., the electronic device 101 in FIG. 1) illustrated in FIG. 4 may be substantially the same as the wearable electronic device 200 according to an embodiment illustrated in FIG. 2. Hereinafter, in describing the wearable electronic device 400 according to an embodiment illustrated in FIG. 4, only the components that are different from those of the wearable electronic device 200 according to an embodiment illustrated in FIG. 2 will be described. Components not described with reference to FIG. 4 may be applied with the description made with reference to FIG. 2.

Referring to FIG. 4, the wearable electronic device 400 according to an embodiment may include a first camera 401, a second camera 402, a first display 211, a second display 212, a depth detection device 204, a first eye tracking device 221, or a second eye tracking device 222.

According to an embodiment, the wearable electronic device 400 may include two cameras for capturing an actual environment in front of the user. According to an embodiment, the two cameras may include a first camera 401 or a second camera 402. The first camera 401 and the second camera 402 may be the same type of camera.

According to an embodiment, each of the first camera 401 and the second camera 402 may be a wide-angle camera, and may be a high-resolution camera compared to the first camera 401 and the second camera 402 illustrated in FIG. 2.

According to an embodiment, the first camera 401 may be disposed to correspond to the user's left eye (e.g., the user's left eye 311 in FIG. 3). The first camera 401 may be a camera having a second angle of view, and the second angle of view may be about 100 degrees. For example, the first camera 401 may be a camera that captures an image with an angle of view of about 100 degrees. The angle of view of about 100 degrees, as the angle of view of the first camera 401, is only an example, and the angle of view of the first camera 401 of the wearable electronic device 400 according to various embodiments of the disclosure may not be limited to the above value (e.g., about 100 degrees).

According to an embodiment, the second camera 402 may be disposed to correspond to the user's right eye (e.g., the user's right eye 312 in FIG. 3). The second camera 402 may be a camera having a second angle of view, and the second angle of view may be about 100 degrees. For example, the second camera 402 may be a camera that captures an image with an angle of view of about 100 degrees.

According to an embodiment, the second camera 402 may be a camera that is substantially the same as or similar to the first camera 401. The angle of view of about 100 degrees, as the angle of view of the second camera 402, is only an example, and the angle of view of the second camera 402 of the wearable electronic device 400 according to various embodiments of the disclosure may not be limited to the above value (e.g., about 100 degrees).

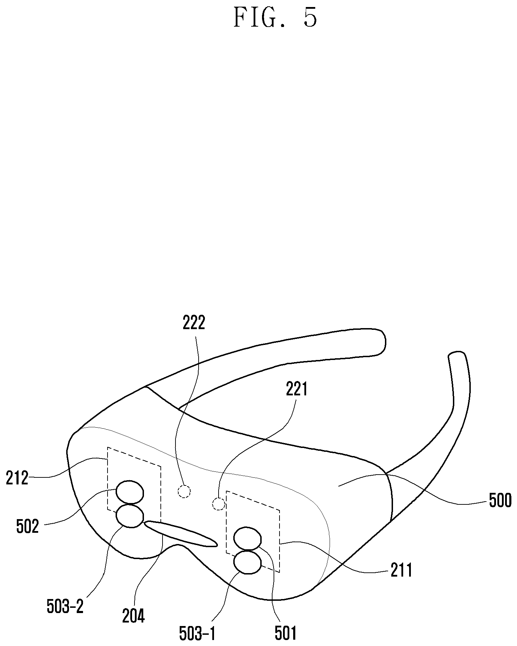

FIG. 5 is a perspective view illustrating a wearable electronic device 500 including four cameras according to an embodiment.

At least a part of the wearable electronic device 500 (e.g., the electronic device 101 in FIG. 1) shown in FIG. 5 may be substantially the same as the wearable electronic device 200 or 400 according to an embodiment shown in FIG. 2 and/or FIG. 4. Hereinafter, in describing the wearable electronic device 500 according to an embodiment illustrated in FIG. 5, only the components that are different from those of the wearable electronic device 200 according to an embodiment illustrated in FIG. 2 will be described. Components not described with reference to FIG. 5 may be applied with the description made with reference to FIG. 2.

Referring to FIG. 5, the wearable electronic device 500 according to an embodiment may include a first camera 501, a second camera 502, a third camera 503-1, a fourth camera 503-2, a first display 211, a second display 212, a depth detection device 204, a first eye tracking device 221, or a second eye tracking device 222.

According to an embodiment, the wearable electronic device 500 may include four cameras for capturing an actual environment in front of the user. According to an embodiment, the four cameras may include a first camera 501, a second camera 502, a third camera 503-1, or a fourth camera 503-2. For example, the first camera 501 and the second camera 502 may be the same type of camera. For example, the third camera 503-1 and the fourth camera 503-2 may be the same type of camera. For example, the first camera 501 and the third camera 503-1 may be different types of cameras. For example, the second camera 520 and the fourth camera 503-2 may be different types of cameras.

According to an embodiment, the first camera 501 may be disposed to correspond to the user's left eye 311. The first camera 501 may be a camera having a first angle of view, and the first angle of view may be about 30 degrees. For example, the first camera 501 may be a camera that captures an image at an angle of view of about 30 degrees. The angle of view of about 30 degrees, as the angle of view of the first camera 501, is only an example, and the angle of view of the first camera 501 of the wearable electronic device 500 according to various embodiments of the disclosure may not be limited to the above value (e.g., about 30 degrees).

According to an embodiment, the second camera 502 may be disposed to correspond to the user's right eye (e.g., the user's right eye 312 in FIG. 3). The second camera 502 may be a camera having a first angle of view, and the first angle of view may be about 30 degrees. For example, the second camera 502 may be a camera that captures an image at an angle of view of about 30 degrees.

According to an embodiment, the second camera 502 may be a camera that is substantially the same as or similar to the first camera 501. The angle of view of about 30 degrees, as the angle of view of the second camera 502, is only an example, and the angle of view of the second camera 502 of the wearable electronic device 500 according to various embodiments of the disclosure may not be limited to the above value (e.g., about 30 degrees).

According to an embodiment, the third camera 503-1 may be disposed to correspond to the user's left eye (e.g., the user's left eye 311 in FIG. 3). The third camera 503-1 may be a camera having a second angle of view greater than the first angle of view, and the second angle of view may be about 100 degrees. For example, the third camera 503-1 may be a camera that captures an image with an angle of view of about 100 degrees.

According to an embodiment, the third camera 503-1 may be a wide-angle camera, which is different from the first camera 501 and the second camera 502. The angle of view of about 100 degrees, as the angle of view of the third camera 503-1, is only an example, and the angle of view of the third camera 503-1 of the wearable electronic device 500 according to various embodiments of the disclosure may not be limited to the above value (e.g., about 100 degrees).

According to an embodiment, the fourth camera 503-2 may be disposed to correspond to the user's right eye (e.g., the user's right eye 312 in FIG. 3). The fourth camera 503-2 may be a camera having a second angle of view greater than the first angle of view, and the second angle of view may be about 100 degrees. For example, the fourth camera 503-2 may be a camera that captures an image with an angle of view of about 100 degrees.

According to an embodiment, the fourth camera 503-2 may be a wide-angle camera, which is different from the first camera 501 and the second camera 502. The angle of view of about 100 degrees, as the angle of view of the fourth camera 503-2, is only an example, and the angle of view of the fourth camera 503-2 of the wearable electronic device 500 according to various embodiments of the disclosure may not be limited to the above value (e.g., about 100 degrees).

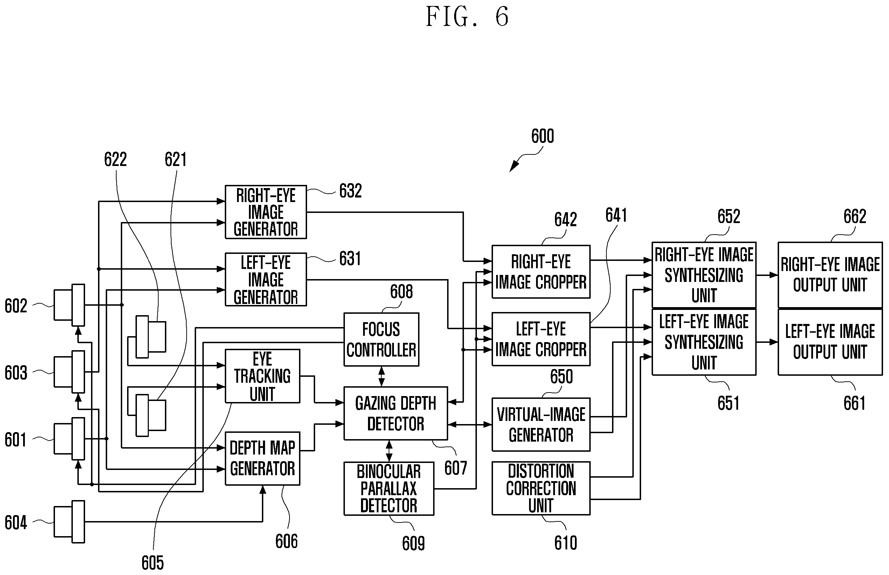

FIG. 6 is a block diagram of a wearable electronic device 600 according to an embodiment.

At least a part of the wearable electronic device 600 (e.g., the electronic device 101 in FIG. 1) shown in FIG. 6 may be substantially the same as or at least partially similar to the wearable electronic device 200, 400, or 500 according to an embodiment shown in FIG. 2 to FIG. 5.

Referring to FIG. 6, the wearable electronic device 600 according to an embodiment may include a first camera 601 (e.g., the first camera 201 in FIG. 2), a second camera 602 (e.g., the second camera 202 in FIG. 2), a third camera 603 (e.g., the third camera 203 in FIG. 2), a depth detection device 604 (e.g., the depth detection device 204 in FIG. 2), a first eye tracking device 621 (e.g., the first eye tracking device 221 in FIG. 2), or a second eye tracking device 622 (e.g., the second eye tracking device 222 in FIG. 2), and the description with reference to FIG. 2 will also be applied thereto.

According to an embodiment, the wearable electronic device 600 may include an eye tracking unit 605, a depth map generator 606, a gazing depth detector 607, a focus controller 608, a binocular parallax detector 609, a left-eye image generator 631, a right-eye image generator 632, a left-eye image cropper 641, a right-eye image cropper 642, a virtual-image generator 650, a distortion correction unit 610, a left-eye image synthesizing unit 651, a right-eye image synthesizing unit 652, a left-eye image output unit 661, or a right-eye image output unit 662. All or some of the eye tracking unit 605, the depth map generator 606, the gazing depth detector 607, the focus controller 608, the binocular parallax detector 609, the left-eye image generator 631, the right-eye image generator 632, the left-eye image cropper 641, the right-eye image cropper 642, the virtual-image generator 650, the distortion correction unit 610, the left-eye image synthesizing unit 651, the right-eye image synthesizing unit 652, the left-eye image output unit 661, or the right-eye image output unit 662 illustrated in FIG. 6 may be included in a processor (e.g., the processor in FIG. 1) of the wearable electronic device 600.

According to an embodiment, the eye tracking unit 605 may be configured to track a user's gaze (e.g., eye tracking (ET)). The eye tracking unit 605 may track the user's left eye 311 using the first eye tracking device 621 and the user's right eye 312 using the second eye tracking device 622. According to an embodiment, the eye tracking unit 605 may detect the user's gaze to a specific object included in an AR image while displaying the AR image (or VR image) through the first display (e.g., the first display 211 in FIG. 2) and the second display (e.g., the second display 212 in FIG. 2).

According to an embodiment, the depth map generator 606 may be configured to generate a depth map. The depth map generator 606 may obtain depth information of an image corresponding to the real world in front of the wearable electronic device 600 using the depth detection device 604 and generate a depth map, based on the obtained depth information.

According to an embodiment, the gazing depth detector 607 may determine the depth of an object (e.g., an external subject) that the user is gazing at, based on the user's gaze tracked by the eye tracking unit 605 and the depth map generated by the depth map generator 606. For example, if the user is gazing at a flower (not shown) as an object included in the AR image, the gazing depth detector 607 may determine the depth of the flower.

According to an embodiment, the focus controller 608 may be configured to control the focus of each of the first camera 601, the second camera 602, and the third camera 603. When the depth of the object (e.g., an external subject) that the user is gazing at is determined by the gazing depth detector 607, the focus controller 608 may control the focus of each of the first camera 601, the second camera 602, and the third camera 603 to correspond to the determined depth. For example, the focus controller 608 may control an auto focus function of each of the first camera 601, the second camera 602, and the third camera 603, based on the determined depth of the object. The wearable electronic device 600 may obtain an in-focus image by controlling the focus of each of the first camera 601, the second camera 602, and the third camera 603 to correspond to the depth of the object that the user is gazing at. The wearable electronic device 600 may generate an AR image, based on the in-focus image, thereby providing a more realistic and high-quality AR image to the user. For example, if the camera is focused on the object that the user is gazing at by tracking the user's gaze, the captured image may have a clear image quality for the object that the user is gazing at and an image quality with an increased defocus for the object away from the user's gaze in proportion to the distance from the user's gaze. Since this image is similar to information that a person usually perceives when gazing at an object in the real world, the wearable electronic device 600 may generate an AR image, based on the in-focus image, thereby providing a more realistic AR image.

According to an embodiment, the binocular parallax detector 609 may detect an inter pupil distance (IPD) of the user. The binocular parallax detector 609 of the wearable electronic device 600 may detect an IPD of the user wearing the wearable electronic device 600 in consideration of the deviation of the IPD between users. For example, there may be individual wearing deviations when the users wear the wearable electronic device 600, and there is a distance between the pupil (e.g., lens) of the camera and the user's eyeball due to the thickness of the wearable electronic device 600, so various offset adjustments may be required. The binocular parallax detector 609 may determine a vergence angle for the depth of a real object or VR object that the user is gazing at through the focus controller 608 and the binocular parallax detector 609. The vergence angle may indicate the convergence angle required for both eyes to gaze at one object. For example, the vergence angle may decrease as the depth of the VR object increases. For example, the vergence angle may increase as the inter pupil distance (IPD) of the user increases. The IPD and vergence angle determined by the binocular parallax detector 609 may be used for synthesizing the left-eye image to be finally displayed through the first display 211 and the right-eye image to be finally displayed through the second display 212.

According to an embodiment, the left-eye image generator 631 may receive an image captured by the first camera 601 and an image captured by the third camera 603, and synthesize the input images to generate a left-eye image. For example, the left-eye image generator 631 may obtain an image of a first angle of view corresponding to the user's left eye 311 through the first camera 601 and an image of a second angle of view, which is a relatively wide viewing angle, through the third camera 603. The image of the first angle of view obtained through the first camera 601 may be an image having an angle of view (e.g., within about 30 degrees) falling within the user's effective field of view, and may be an image having a relatively high angular resolution. The image of the second angle of view obtained through the third camera 603 may be an image having an angle of view (e.g., about 100 degrees or more) falling outside of the user's effective field of view, and may be an image having a relatively low angular resolution. The left-eye image generator 631 may align and synthesize images to provide an image (e.g., an image acquired using the first camera 601) with a relatively high angular resolution for an area within the effective field of view corresponding to the user's left eye 311 and provide an image (e.g., an image acquired using the third camera 603) with a relatively high low angular resolution for an area outside the effective field of view. Accordingly, the left-eye image generator 631 may provide an image with a wide angle of view (e.g., 100 degrees or more) in terms of perceived visual acuity to the user and a high angular resolution of 60 PPD within the effective field of view.

According to an embodiment, the right-eye image generator 632 may receive an image captured by the second camera 602 and an image captured by the third camera 603, and synthesize the input images to generate a right-eye image. For example, the right-eye image generator 632 may obtain an image of a first angle of view corresponding to the user's right eye 312 through the second camera 602 and an image of a second angle of view, which is a relatively wide view angle, through the third camera 603. The image of the first angle of view obtained through the second camera 602 may be an image having an angle of view (e.g., within about 30 degrees) falling within the user's effective field of view, and may be an image having a relatively high angular resolution. The image of the second angle of view obtained through the third camera 603 may be an image having an angle of view (e.g., about 100 degrees or more) falling outside of the user's effective field of view, and may be an image having a relatively low angular resolution. The right-eye image generator 632 may align and synthesize images to provide an image (e.g., an image acquired using the second camera 602) with a relatively high angular resolution for an area within the effective field of view corresponding to the user's right eye 312 and provide an image (e.g., an image acquired using the third camera 603) with a relatively high low angular resolution for an area outside the effective field of view. Accordingly, the left-eye image generator 631 may provide an image with a wide angle of view (e.g., 100 degrees or more) in terms of perceived visual acuity to the user and a high angular resolution of 60 PPD within the effective field of view.

As shown in Table 1, the field of view of an average person may include a discriminative field of view corresponding to an angle of view of about 5 degrees, an effective field of view corresponding to an angle of view of about 30 degrees, or a stable fixation field of view corresponding to an angle of view of about 60 degrees to about 90 degrees.

**[Table 1]**

| Horizontal field of view | Angle of view | Visual acuity | Remarks |
|---|---|---|---|
| Discriminative field of view | about 5 degrees | approximately 0.5 or more | Area with excellent visual acuity function |
| Effective field of view | about 30 degrees | approximately 0.1 or more | Area where information can be recognized instantly with only eye movement |
| Stable fixation field of view | about 60 degrees to about 90 degrees | - | Area where presence or absence of object can be identified |

According to an embodiment, the left-eye image cropper 641 may be configured to crop a portion of the left-eye image synthesized by the left-eye image generator 631 in consideration of the resolution of the first display 211. The left-eye image cropper 641 may determine a cropped area, based on the IPD and vergence angle determined by the binocular parallax detector 609. For example, the left-eye image cropper 641 may crop a portion of the left-eye image by considering the binocular parallax of the user.

According to an embodiment, the right-eye image cropper 642 may be configured to crop a portion of the right-eye image synthesized by the right-eye image generator 632 in consideration of the resolution of the second display 212. The right-eye image cropper 642 may determine a cropped area, based on the IPD and vergence angle determined by the binocular parallax detector 609. For example, the right-eye image cropper 642 may crop a portion of the right-eye image by considering the binocular parallax of the user.

According to an embodiment, the virtual-image generator 650 may be configured to generate a VR image. The virtual-image generator 650 may generate a VR image, corresponding to a real image of the object, to be fused by the left-eye image cropper 641 and the right-eye image cropper 642. The positions of objects included in the VR image generated by the virtual-image generator 650 may be configured so that each object may have a predetermined depth. The virtual-image generator 650 may transmit depth information of the VR image to the gazing depth detector 607, and at this time, the depth information may correspond to a depth map of the real image of the subject extracted by the depth map generator 606.

According to an embodiment, the distortion correction unit 610 may generate a distortion correction coefficient as a variable used by the left-eye image synthesizing unit 651 to synthesize a left-eye image and by the right-eye image synthesizing unit 652 to synthesize a right-eye image. The distortion correction coefficient may be a variable for compensating for the distortion of a lens (e.g., an eye lens) installed on the front side of the wearable electronic device 600. The distortion correction unit 610 of the wearable electronic device 600 may allow the user to view a regular AR image by adjusting the configuration value of the distortion correction coefficient. For example, the angle of view of the wearable device 600 may be required to be about 100 degrees or more. At this time, a lens (e.g., eye lens) having an angle of view of about 100 degrees or more may cause pin cushion distortion. The distortion correction unit 610 may apply barrel distortion to the display input image in order to pre-correct the pin cushion distortion occurring in the lens (e.g., eye lens). Through this, the display image transmitted through the lens (e.g., eye lens) may be perceived by the user as a regular image without distortion. Distortion may vary depending on the design of the lens (e.g., eye lens), and the distortion correction unit 610 may include an image distortion table for correcting the distortion of the corresponding lens (e.g., eye lens). According to an embodiment, the left-eye image synthesizing unit 651 may synthesize a left-eye image cropped by the left-eye image cropper 641 and a VR image generated by the virtual-image generator 650, and transmit the synthesized image to the left-eye image output unit 661.

According to an embodiment, the right-eye image synthesizing unit 652 may synthesize a right-eye image cropped by the right-eye image cropper 642 and a VR image generated by the virtual-image generator 650, and transmit the synthesized image to the right-eye image output unit 662.

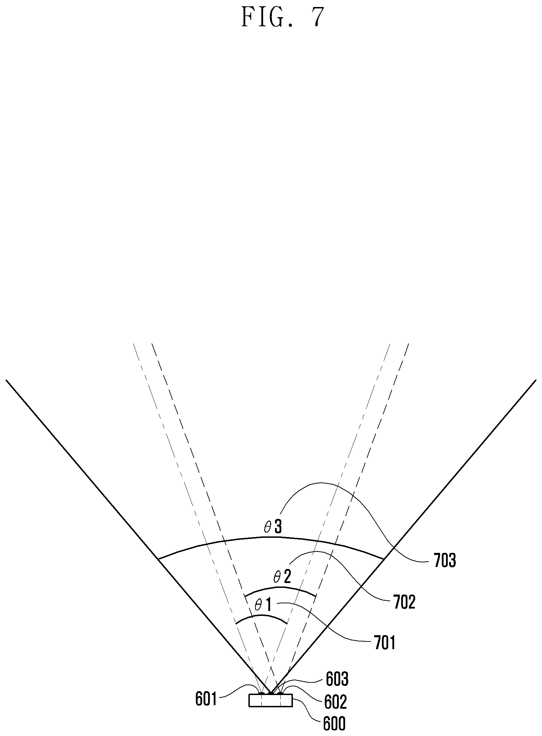

FIG. 7 illustrates angles of view of respective cameras included in a wearable electronic device 600 according to an embodiment.

Referring to FIG. 7, the wearable electronic device 600 according to an embodiment may include a first camera 601, a second camera 602, or a third camera 603.

According to an embodiment, the first camera 601 and the second camera 602 may be configured to obtain an image corresponding to the left eye and an image corresponding to the right eye, which have a relatively high angular resolution. For example, 701 illustrated in FIG. 7 may represent an angle of view θ1 of an image corresponding to the left eye captured by the first camera 601, which may have a first angle of view of about 30 degrees. 702 illustrated in FIG. 7 may represent an angle of view θ2 of an image corresponding to the right eye captured by the second camera 602, which may have a first angle of view of about 30 degrees. The image corresponding to the left eye may indicate an image corresponding to a front view seen from the user's left eye. The image corresponding to the right eye may indicate an image corresponding to a front view seen from the user's right eye.

According to an embodiment, the third camera 603 may be configured to obtain a common image corresponding to a relatively wide viewing angle. For example, 703 illustrated in FIG. 7 may represent an angle of view θ3 of a common image captured by the third camera 603, which may have a second angle of view of about 100 degrees.

In FIG. 7, the distance between 601 and 602 corresponds to the inter pupil distance (IPD) of the user, and may be set to about 65 mm, but may be adjusted in consideration of the user's deviation. For example, the electronic device 600 may include an inter pupil distance (IPD) adjustment unit, as a hardware configuration, to adjust the inter pupil distance (IPD) in consideration of the user's deviation. Using the inter pupil distance (IPD) adjustment unit, the user may vary the distance between the first camera 601 and the second camera 602 to match the inter pupil distance (IPD) of the user. The user may manually vary the distance between the first camera 601 and the second camera 602 using the inter pupil distance (IPD) adjustment unit, or may automatically vary the distance between the first camera 601 and the second camera 602 using a motor.

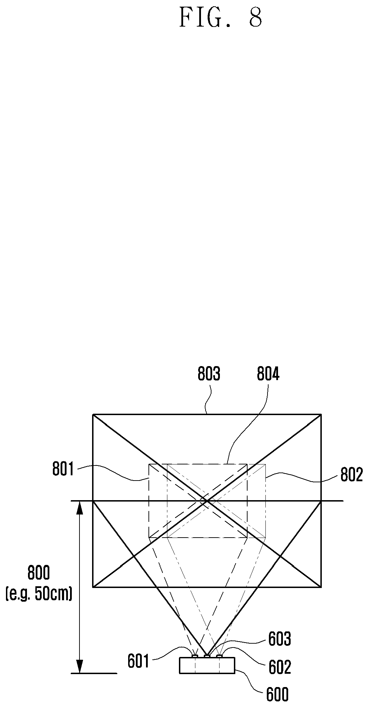

FIG. 8 illustrates a state in which a camera of a wearable electronic device 600 photographs a subject at a first distance according to an embodiment. For example, the first distance 800 may be about 50 cm, and FIG. 8 may be an example schematically illustrating the state where the distance (or depth) of the subject is about 50 cm.

In FIG. 8, 801 may represent a viewing angle area of the first camera 601, 802 may represent a viewing angle area of the second camera 602, 803 may represent a viewing angle area of the third camera 603, and 804 may represent an overlapping area of 801 and 802.

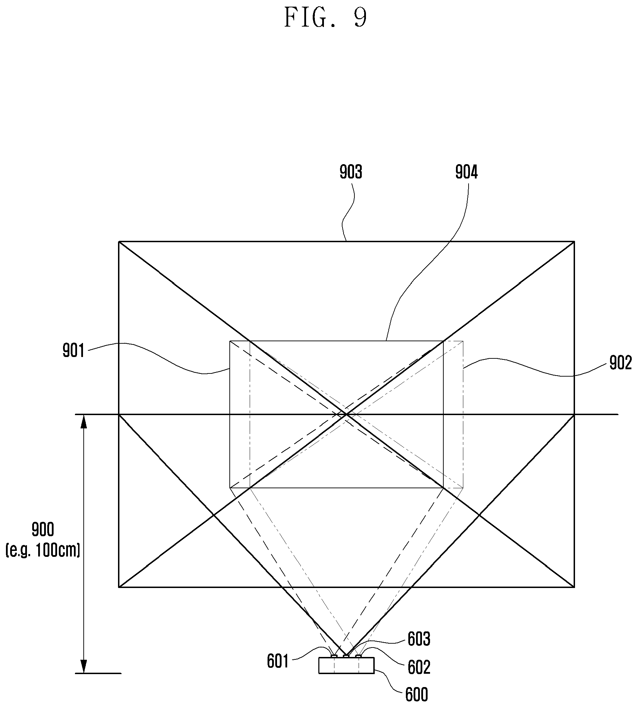

FIG. 9 is an example illustrating the state in which a camera of a wearable electronic device 600 according to an embodiment photographs a subject at a second distance 900. For example, the second distance may be about 100 cm, and FIG. 9 may be an example schematically illustrating the state where the distance (or depth) of the subject is about 100 cm.

In FIG. 9, 901 may represent a viewing angle area of the first camera 601, 902 may represent a viewing angle area of the second camera 602, 903 may represent a viewing angle area of the third camera 603, and 904 may represent an overlapping area of 901 and 902.

Referring to FIG. 8 and FIG. 9, when the wearable electronic device 600 according to an embodiment determines the IPD of the user (or when the IPD is fixed), the relative ratio of the overlapping area 804 or 904 of the angle of view by the first camera 601 and the angle of view by the second camera 602 may vary depending on the distance to the subject. For example, the ratio of the overlapping area 804 or 904 to the angle of view by the first camera 601 or to the angle of view by the second camera 602 may increase as the subject shooting distance increases. For example, as illustrated in FIG. 8, if the subject shooting distance is relatively short, the ratio of the overlapping area 804 to the angle of view 801 by the first camera 601 or to the angle of view 802 by the second camera 602 may be relatively small. For example, as illustrated in FIG. 9, if the subject shooting distance is relatively long, the ratio of the overlapping area 904 to the angle of view 901 by the first camera 601 or to the angle of view 902 by the second camera 602 may be relatively large. If the subject shooting distance approaches infinity, the ratio of the overlapping area 804 or 904 to the angle of view 801 or 901 by the first camera 601 or to the angle of view 802 or 902 by the second camera 602 may converge to about 100%.

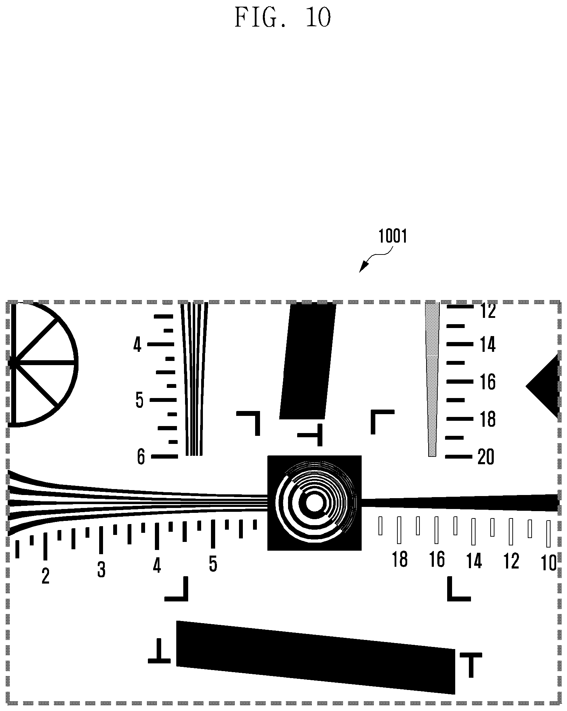

FIG. 10 illustrates an image captured by a first camera 601 of a wearable electronic device 600 according to an embodiment. In FIG. 10, 1001 indicates an image of a first angle of view captured by the first camera 601, which has a higher angular resolution.

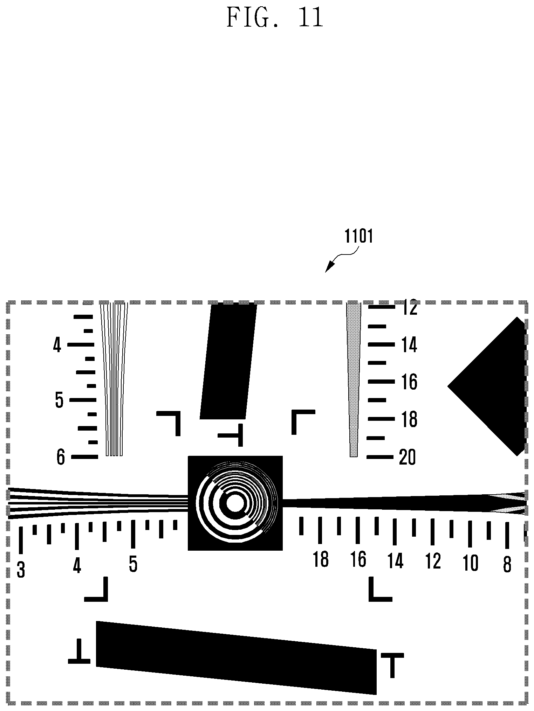

FIG. 11 illustrates an image captured by a second camera 602 of a wearable electronic device 600 according to an embodiment. In FIG. 11, 1101 indicates an image of a first angle of view captured by the second camera 602, which has a higher angular resolution.

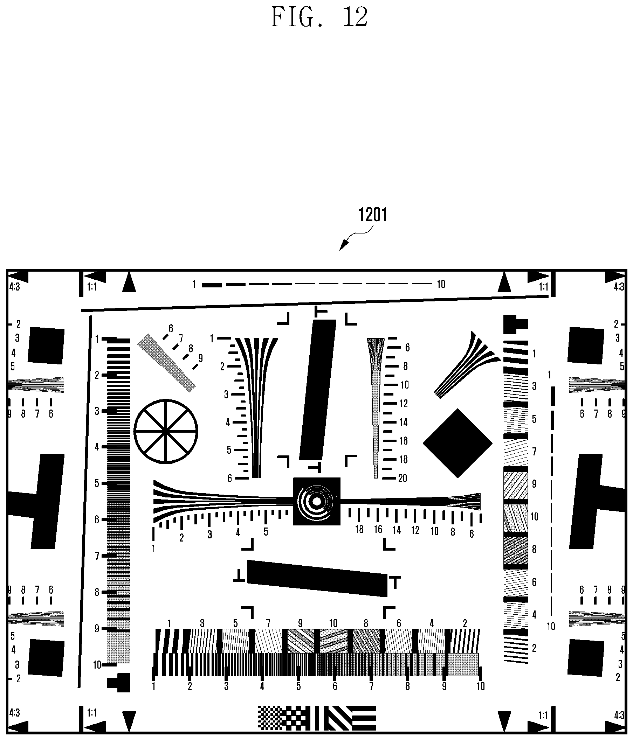

FIG. 12 illustrates an image captured by a third camera 603 of a wearable electronic device 600 according to an embodiment. In FIG. 12, 1201 indicates an image of a second angle of view captured by the third camera 603, which has a lower angular resolution but a wide viewing angle.

Referring to FIGS. 10 to 12, the wearable electronic device 600 according to an embodiment may generate an AR image, based on an image of a second angle of view captured by the third camera 603, and may align and synthesize, for a partial area corresponding to the user's gaze, an image captured by the first camera 601 and an image captured by the second camera 602, thereby providing the user with an image having a wide angle of view (e.g., 100 degrees or more) in terms of perceived visual acuity and a high angular resolution of 60 PPD within the effective field of view.

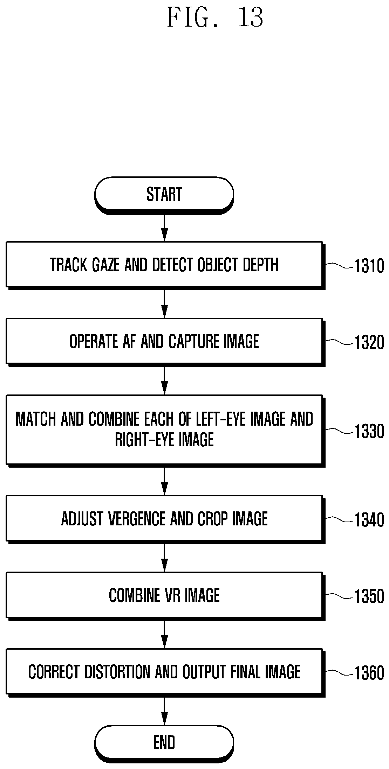

FIG. 13 is a flowchart illustrating the operation of a wearable electronic device 600 according to an embodiment.

At least some of the operations illustrated in FIG. 13 may be omitted. At least some of the operations described with reference to other drawings in the disclosure may be further performed before or after at least some of the operations illustrated in FIG. 13.

The operations illustrated in FIG. 13 may be performed by a processor (e.g., the processor in FIG. 1). For example, a memory (e.g., the memory 130 in FIG. 1) of the wearable electronic device 600 may store instructions that, when executed, cause the processor to perform at least some operations illustrated in FIG. 13.

In operation 1310, a wearable electronic device (e.g., the wearable electronic device 600 in FIG. 6) according to an embodiment may track the gaze of a user (e.g., eye tracking (ET)) and detect the user's gaze to a specific object. The wearable electronic device 600 may obtain depth information of an image corresponding to the real world in front of the wearable electronic device 600 using a depth detection device (e.g., the depth detection device 604 in FIG. 6) and generate a depth map, based on the obtained depth information. According to an embodiment, the wearable electronic device 600 may determine the depth of an object (e.g., an external subject) that the user is gazing at, based on the generated depth map.

In operation 1320, if the depth of the object (e.g., an external subject) that the user is gazing at is determined, the wearable electronic device 600 according to an embodiment may control the focus of each of a first camera (e.g., the first camera 601 in FIG. 6), a second camera (e.g., the second camera 602 in FIG. 6), and a third camera (e.g., the third camera 603 in FIG. 6) to correspond to the determined depth. For example, a focus controller (e.g., the focus controller 608 in FIG. 6) may control the auto-focus function of each of the first camera 601, the second camera 602, and the third camera 603, based on the determined depth of the object. The wearable electronic device 600 may obtain an in-focus image by controlling the focus of each of the first camera 601, the second camera 602, and the third camera 603 to correspond to the depth of the object that the user is gazing at.

In operation 1330, the wearable electronic device 600 according to an embodiment may perform alignment and synthesis of a left-eye image and a right-eye image, respectively. The wearable electronic device 600 may align and synthesize an image corresponding to the left eye captured by the first camera 601 and a wide-viewing angle image captured by the third camera 603, thereby generating a left-eye image. The wearable electronic device 600 may align and synthesize an image corresponding to the right eye captured by the second camera 602 and a wide-viewing angle image captured by the third camera 603, thereby generating a right-eye image. The wearable electronic device 600 may use various image alignment techniques to prevent a boundary between different images from being recognized when synthesizing images captured by the cameras with different angles of view.

In operation 1340, the wearable electronic device 600 according to an embodiment may detect an inter pupil distance (IPD) of a user and determine a vergence angle for a depth of a real object or a VR object of a subject that the user is gazing at. The wearable electronic device 600 may crop a portion of the left-eye image synthesized by a left-eye image generator 631 in consideration of a resolution of a first display (e.g., the first display 211 in FIG. 2) and a binocular parallax (e.g., an IPD) of the user, and may crop a portion of the right-eye image synthesized by a right-eye image generator 632 in consideration of a resolution of a second display (e.g., the second display 212 in FIG. 2) and a binocular parallax (e.g., an IPD) of the user.

In operation 1350, the wearable electronic device 600 according to an embodiment may generate a VR image and synthesize the generated VR image with the cropped left-eye image and right-eye image.

In operation 1360, the wearable electronic device 600 according to an embodiment may perform distortion compensation on the image generated in operation 1350, based on a distortion correction coefficient for compensating for distortion of an eye lens installed on the front side of the wearable electronic device 600, and output a final image. For example, the distortion correction unit 610 of the wearable electronic device 600 may adjust a configuration value of the distortion correction coefficient so that the user is able to view a regular AR image.

According to an embodiment, a person has an eye (e.g., dominant eye) that is mainly used among both eyes when looking at an object, and the user may configure in advance which eye is the dominant eye among the left eye and the right eye in the electronic device (e.g., the electronic device 600 in FIG. 6). For example, the electronic device 600 according to an embodiment of the disclosure may obtain data on which eye is the dominant eye from among the left eye and the right eye according to a user's input, and configure the dominant eye.

According to an embodiment, the electronic device 600 according to an embodiment of the disclosure may determine which eye is the dominant eye from among the left eye and the right eye, and configure the dominant eye. For example, the electronic device 600 according to an embodiment of the disclosure may display an image for determining the dominant eye. Thereafter, the electronic device 600 may identify the gaze positions of both eyes of the user through an eye tracking camera (ET cam) (e.g., the first eye tracking device 221, the second eye tracking device 222 in FIG. 2, and the eye tracking unit 605 in FIG. 6) to determine the dominant eye.

According to an embodiment, when the dominant eye is determined from among the both eyes of the user, the electronic device 600 may configure the image properties differently when generating the left eye image and the right eye image. For example, the electronic device 600 may configure at least one property among the resolution of the gaze area (high-resolution area) and the size of the gaze area as a first value for the image of the dominant eye. For example, the electronic device 600 may configure the blur filter intensity around the gaze area as a third value for the image of the dominant eye.

According to an embodiment, the electronic device 600 may configure at least one property among the resolution of the gaze area (high-resolution area) and the size of the gaze area for the image of the non-dominant eye as a second value less than the first value. For example, the electronic device 600 may configure the blur filter intensity around the gaze area as a fourth value greater than the third value for the image of the non-dominant eye.

That is, the electronic device 600 may configure at least one property among the resolution of the gaze area (high-resolution area) and the size of the gaze area for the image of the dominant eye to be greater than for the image of the non-dominant eye.

According to an embodiment of the disclosure, a wearable electronic device (e.g., the electronic device 400 in FIG. 4, the electronic device 500 in FIG. 5, or the electronic device 600 in FIG. 6) may include a first camera (e.g., the first camera 401 in FIG. 4, the first camera 501 in FIG. 5, or the first camera 601 in FIG. 6) corresponding to the user's left eye and having a first angle of view, a second camera (e.g., the second camera 402 in FIG. 4, the second camera 502 in FIG. 5, or the second camera 602 in FIG. 6) corresponding to the user's right eye and having the first angle of view, a third camera (e.g., the third camera 203 in FIG. 2) having a second angle of view greater than the first angle of view, a first display (e.g., the first display 211 in FIGS. 4 and 5) corresponding to the user's left eye, a second display (e.g., the display 212 in FIGS. 4 and 5) corresponding to the user's right eye, and a processor (e.g., the processor 120 in FIG. 1). The processor 120 may generate a left-eye image, based on an image corresponding to the left eye obtained through the first camera 401, 501, or 601 and a wide-viewing angle image obtained through the third camera 203. The processor 120 may generate a right-eye image, based on an image corresponding to the right eye obtained through the second camera 402, 502, or 602 and the wide-viewing angle image. The processor 120 may display a left-eye composite image obtained by synthesizing a virtual image with the left-eye image through the first display 211. The processor 120 may display a right-eye composite image obtained by synthesizing the virtual image with the right-eye image through the second display 212.

According to an embodiment, the processor 120 may track a user's gaze. The processor 120 may identify depth information of an object corresponding to the user's gaze. The processor 120 may adjust the focus of each of the first camera 401, 501, or 601, the second camera 402, 502, or 602, and the third camera 203, based on the verified depth information. The processor 120 may capture the image corresponding to the left eye, the image corresponding to the right eye, and the wide-viewing angle image, based on the adjusted focus.

According to an embodiment, the processor 120 may configure the left-eye image and the right-eye image to have the second angle of view, based on the wide-viewing angle image. The processor 120 may generate the left-eye image by synthesizing a portion of the left-eye image corresponding to the user's gaze with the image corresponding to the left eye obtained using the first camera 401, 501, or 601. The processor 120 may generate the right-eye image by synthesizing a portion of the right-eye image corresponding to the user's gaze with the image corresponding to the right eye obtained using the second camera 402, 502, or 602.

According to an embodiment, the angular resolution of the image corresponding to the left eye may be higher than the angular resolution of the wide-viewing angle image. The angular resolution of the image corresponding to the right eye may be higher than the angular resolution of the wide-viewing angle image.

According to an embodiment, the first camera 401, 501, or 601 and the second camera 402, 502, or 602 may be the same type of camera. The first camera 401, 501, or 601 and the third camera 203 may be different types of cameras.

According to an embodiment, the first angle of view may be greater than 30 degrees and less than 60 degrees. The second angle of view may be greater than 100 degrees.

According to an embodiment, the processor 120 may detect an inter pupil distance (IPD) of the user. The processor 120 may determine a vergence angle for a depth of an object corresponding to the user's gaze. The processor 120 may crop at least a portion of the left-eye image, based on the determined vergence angle. The processor 120 may crop at least a portion of the right-eye image, based on the determined vergence angle.

According to an embodiment, the third camera 203 may be disposed between the first camera 401, 501, or 601 and the second camera 402, 502, or 602.

According to an embodiment, the wearable electronic device may further include an eye tracking unit configured to track the gaze of the left eye or the right eye of the user and determine a dominant eye. If the dominant eye is determined, image properties may be configured differently between an image of the dominant eye and an image of a non-dominant eye when generating the same.

According to an embodiment, at least one property among a resolution of a gaze area and a resolution size of the gaze area may be configured as a first value for an image of the dominant eye. At least one property among a resolution of a gaze area and a resolution size of the gaze area may be configured as a second value less than the first value for an image of the non-dominant eye,

According to an embodiment, a blur filter intensity around a gaze area may be configured as a third value for the image of the dominant eye. A blur filter intensity around a gaze area may be configured as a fourth value greater than the third value for the image of the non-dominant eye.

According to an embodiment, the image property corresponding to the non-dominant eye may be configured as a reference value, and the image property corresponding to the dominant eye may be configured to be better (e.g., as a greater value) than the image property corresponding to the non-dominant eye. Through this, the current consumption may be reduced.

According to an embodiment, the image property corresponding to the dominant eye may be configured as a reference value, and the image property corresponding to the non-dominant eye may be configured to be lower (e.g., as a smaller value) than the image property corresponding to the dominant eye. Through this, the current consumption may be reduced.

According to an embodiment, when the gaze is focused on the non-dominant eye, the dominant eye and the non-dominant eye may be switched. For example, in the case where the left eye is the dominant eye, if the gaze is extremely directed to the right when gazing at an object positioned at the right end, the dominant eye may be instantly changed to the right eye.

An operation method of a wearable electronic device 400, 500, or 600 according to an embodiment of the disclosure may include obtaining an image corresponding to the left eye corresponding to the user's left eye and having a first angle of view using a first camera 401, 501, or 601, obtaining an image corresponding to the right eye corresponding to the user's right eye and having the first angle of view using a second camera 402, 502, or 602, obtaining a wide-viewing angle image having a second angle of view greater than the first angle of view using a third camera 203, generating a left-eye image, based on the image corresponding to the left eye obtained through the first camera 401, 501, or 601 and the wide-viewing angle image obtained through the third camera 203, generating a right-eye image, based on the image corresponding to the right eye obtained through the second camera 402, 502, or 602 and the wide-viewing angle image, displaying a left-eye composite image obtained by synthesizing a virtual image with the left-eye image through a first display 211 corresponding to the user's left eye, and displaying a right-eye composite image obtained by synthesizing the virtual image with the right-eye image through a second display 212 corresponding to the user's right eye.

According to an embodiment, a user's gaze may be tracked. Depth information of an object corresponding to the user's gaze may be identified. The focus of each of the first camera 401, 501, or 601, the second camera 402, 502, or 602, and the third camera 203 may be adjusted based on the identified depth information. The image corresponding to the left eye, the image corresponding to the right eye, and the wide-viewing angle image may be captured based on the adjusted focus.

According to an embodiment, the left-eye image and the right-eye image may be configured to have the second angle of view, based on the wide-viewing angle image. The left-eye image may be generated by synthesizing a portion of the left-eye image corresponding to the user's gaze with the image corresponding to the left eye obtained using the first camera 401, 501, or 601. The right-eye image may be generated by synthesizing a portion of the right-eye image corresponding to the user's gaze with the image corresponding to the right eye obtained using the second camera 402, 502, or 602.

According to an embodiment, an angular resolution of the image corresponding to the left eye may be higher than an angular resolution of the wide-viewing angle image. An angular resolution of the image corresponding to the right eye may be higher than the angular resolution of the wide-viewing angle image.

According to an embodiment, the first camera 401, 501, or 601 and the second camera 402, 502, or 602 may be the same type of camera. The first angle of view may be greater than 30 degrees and less than 60 degrees.

According to an embodiment, the first camera 401, 501, or 601 and the third camera 203 may be different types of cameras. The second angle of view may be greater than 100 degrees.

According to an embodiment, an inter pupil distance (IPD) of the user may be detected. A vergence angle for a depth of an object corresponding to the user's gaze may be determined. At least a portion of the left-eye image may be cropped based on the determined vergence angle. At least a portion of the right-eye image may be cropped based on the determined vergence angle.

According to an embodiment, the third camera 203 may be disposed between the first camera 401, 501, or 601 and the second camera 402, 502, or 602 to obtain the wide-viewing angle image.

According to an embodiment, the gaze of the left eye or the right eye of the user may be tracked to determine a dominant eye. If the dominant eye is determined, image properties may be configured differently between an image of the dominant eye and an image of a non-dominant eye when generating the same.

According to an embodiment, at least one property among a resolution of a gaze area and a resolution size of the gaze area may be configured as a first value for an image of the dominant eye. At least one property among a resolution of a gaze area and a resolution size of the gaze area may be configured as a second value less than the first value for an image of the non-dominant eye,
According to an embodiment, a blur filter intensity around a gaze area may be configured as a third value for the image of the dominant eye. A blur filter intensity around a gaze area may be configured as a fourth value greater than the third value for the image of the non-dominant eye.

According to an embodiment, the image property corresponding to the non-dominant eye may be configured as a reference value, and the image property corresponding to the dominant eye may be configured to be better (e.g., as a greater value) than the image property corresponding to the non-dominant eye. Through this, the current consumption may be reduced.

According to an embodiment, the image property corresponding to the dominant eye may be configured as a reference value, and the image property corresponding to the non-dominant eye may be configured to be lower (e.g., as a smaller value) than the image property corresponding to the dominant eye. Through this, the current consumption may be reduced.

According to an embodiment, when the gaze is focused on the non-dominant eye, the dominant eye and the non-dominant eye may be switched. For example, in the case where the left eye is the dominant eye, if the gaze is extremely directed to the right when gazing at an object positioned at the right end, the dominant eye may be instantly changed to the right eye.

A wearable electronic device according to an embodiment of the disclosure and an operation method thereof are able to provide a user with an augmented reality image with high angular resolution to provide a sense of reality similar to viewing the real world, facilitate design with compact and lightweight configuration, and reduce eye fatigue of the user.

## Claims

1. A wearable electronic device comprising:
a first camera corresponding to the user's left eye and having a first angle of view;
a second camera corresponding to the user's right eye and having the first angle of view;
a third camera having a second angle of view greater than the first angle of view;
a first display corresponding to the user's left eye;
a second display corresponding to the user's right eye; and
a processor,
wherein the processor is configured to:
generate a left-eye image, based on an image corresponding to the left eye obtained through the first camera and a wide-viewing angle image obtained through the third camera;
generate a right-eye image, based on an image corresponding to the right eye obtained through the second camera and the wide-viewing angle image;
display a left-eye composite image obtained by synthesizing a virtual image with the left-eye image through the first display; and
display a right-eye composite image obtained by synthesizing the virtual image with the right-eye image through the second display.

2. The wearable electronic device according to claim 1,
wherein the processor is configured to:
track a user's gaze;
identify depth information of an object corresponding to the user's gaze;
adjust the focus of each of the first camera, the second camera, and the third camera, based on the verified depth information; and
capture the image corresponding to the left eye, the image corresponding to the right eye, and the wide-viewing angle image, based on the adjusted focus.

3. The wearable electronic device according to one of claims 1 to 2,
wherein the processor is configured to:
configure the left-eye image and the right-eye image to have the second angle of view, based on the wide-viewing angle image;
generate the left-eye image by synthesizing a portion of the left-eye image corresponding to the user's gaze with the image corresponding to the left eye obtained using the first camera; and
generate the right-eye image by synthesizing a portion of the right-eye image corresponding to the user's gaze with the image corresponding to the right eye obtained using the second camera.

4. The wearable electronic device according to one of claims 1 to 3,
wherein an angular resolution of the image corresponding to the left eye is higher than an angular resolution of the wide-viewing angle image; and
wherein an angular resolution of the image corresponding to the right eye is higher than the angular resolution of the wide-viewing angle image.

5. The wearable electronic device according to one of claims 1 to 4,
wherein the first camera and the second camera are the same type of camera, and
wherein the first camera and the third camera are different types of cameras.

6. The wearable electronic device according to one of claims 1 to 5,
wherein the first angle of view is greater than 30 degrees and less than 60 degrees, and
wherein the second angle of view is greater than 100 degrees.

7. The wearable electronic device according to one of claims 1 to 6,
wherein the processor is configured to:
detect an inter pupil distance (IPD) of the user;
determine a vergence angle for a depth of an object corresponding to the user's gaze;
crop at least a portion of the left-eye image, based on the determined vergence angle; and
crop at least a portion of the right-eye image, based on the determined vergence angle.

8. The wearable electronic device according to one of claims 1 to 7,
wherein the third camera is disposed between the first camera and the second camera.

9. The wearable electronic device according to one of claims 1 to 8,
further comprising an eye tracking unit configured to track the gaze of the left eye or the right eye of the user and determine a dominant eye,
wherein, once the dominant eye is determined, image properties are configured differently between an image of the dominant eye and an image of a non-dominant eye when generating the same.

10. The wearable electronic device according to one of claims 1 to 9,
wherein at least one property among a resolution of a gaze area and a resolution size of the gaze area is configured as a first value for an image of the dominant eye,
wherein at least one property among a resolution of a gaze area and a resolution size of the gaze area is configured as a second value less than the first value for an image of the non-dominant eye,
wherein a blur filter intensity is configured as a third value for the image of the dominant eye, and
wherein a blur filter intensity is configured as a fourth value greater than the third value for the image of the non-dominant eye.

11. An operation method of a wearable electronic device, the method comprising:
obtaining an image corresponding to the left eye corresponding to the user's left eye and having a first angle of view using a first camera;
obtaining an image corresponding to the right eye corresponding to the user's right eye and having the first angle of view using a second camera;
obtaining a wide-viewing angle image having a second angle of view greater than the first angle of view using a third camera;
generating a left-eye image, based on the image corresponding to the left eye obtained through the first camera and the wide-viewing angle image obtained through the third camera;
generating a right-eye image, based on the image corresponding to the right eye obtained through the second camera and the wide-viewing angle image;
displaying a left-eye composite image obtained by synthesizing a virtual image with the left-eye image through a first display corresponding to the user's left eye; and
displaying a right-eye composite image obtained by synthesizing the virtual image with the right-eye image through a second display corresponding to the user's right eye.

12. The operation method of a wearable electronic device according to claim 11, further comprising:
tracking a user's gaze;
identifying depth information of an object corresponding to the user's gaze;
adjusting the focus of each of the first camera, the second camera, and the third camera, based on the identified depth information; and
capturing the image corresponding to the left eye, the image corresponding to the right eye, and the wide-viewing angle image, based on the adjusted focus.

13. The operation method of a wearable electronic device according to one of claims 11 to 12, further comprising:
configuring the left-eye image and the right-eye image to have the second angle of view, based on the wide-viewing angle image;
generating the left-eye image by synthesizing a portion of the left-eye image corresponding to the user's gaze with the image corresponding to the left eye obtained using the first camera; and
generating the right-eye image by synthesizing a portion of the right-eye image corresponding to the user's gaze with the image corresponding to the right eye obtained using the second camera.

14. The operation method of a wearable electronic device according to one of claims 11 to 13,
wherein an angular resolution of the image corresponding to the left eye is higher than an angular resolution of the wide-viewing angle image, and
wherein an angular resolution of the image corresponding to the right eye is higher than the angular resolution of the wide-viewing angle image.

15. The operation method of a wearable electronic device according to one of claims 11 to 14,
wherein the first camera and the second camera are the same type of camera, and
wherein the first angle of view is greater than 30 degrees and less than 60 degrees.
